# EUROPEAN PATENT APPLICATION

(11) **EP 3 499 049 A1**
(43) Date of publication of application: **19.06.2019**
(21) Application number: 18211701.0
(22) Date of filing: 11.12.2018
(51) Int. Cl.: F15B 21/0427, B64D 41/00, F15B 1/26

(54) **HYDRAULIC SYSTEM WITH A RESERVOIR HAVING HEATING MEANS**

(30) Priority: 15.12.2017 GB 201721055
(71) Applicant: Airbus Operations Limited, Bristol BS34 7PA (GB)
(72) Inventor: DIDEY, Arnaud, Bristol, BS34 7PA (GB)
(74) Representative: EIP

(57) **Abstract**

Disclosed is an apparatus for controlling one or more characteristics of a hydraulic system of an aircraft. The apparatus comprises a heat providing element arranged to provide heat to the contents of a reservoir of the hydraulic system, and a processor arranged to control the operation of the heat providing element. Also disclosed is a method of controlling heat provision to a hydraulic system of an aircraft and a system for controlling one or more characteristics of a hydraulic system of an aircraft.

## Description

### TECHNICAL FIELD

The present invention relates to hydraulic systems of an aircraft.

### BACKGROUND

An aircraft may comprise hydraulic systems for various purposes, such as for actuating various component of the aircraft, for example. The hydraulic systems of an aircraft may be intended to function in certain operating conditions including, for example, a temperature lower limit, a temperature range, a range of gas pressures inside the reservoir of the hydraulic system, etc.

### SUMMARY

A first aspect of the present invention provides an apparatus for modifying characteristics of a hydraulic system of an aircraft. The apparatus comprises a heat providing element arranged to provide heat to the contents of a reservoir of the hydraulic system; and a processor arranged to control the operation of the heat providing element.

Optionally, the processor is arranged to control the heat providing element based on one or more characteristics of the hydraulic system as detected by one or more instruments associated with the hydraulic system.

Optionally, the one or more characteristics of the hydraulic system comprise a temperature as detected by a temperature sensor included in the reservoir.

Optionally, the processor is arranged to activate the heat providing element to provide heat if the temperature as detected by the temperature sensor included in the reservoir is lower than a temperature threshold value.

Optionally, the one or more characteristics of the hydraulic system comprise a gas pressure as detected by a gas pressure sensor included in the reservoir.

Optionally, the processor is arranged to activate the heat providing element to provide heat if the gas pressure as detected by a gas pressure sensor included in the reservoir is lower than a gas pressure threshold value.

Optionally, the one or more characteristics of the hydraulic system comprise a fluid pressure as detected by a fluid pressure sensor included in the reservoir.

Optionally, the processor is arranged to activate the heat providing element to provide heat if the fluid pressure as detected by the fluid pressure sensor included in the reservoir is lower than a fluid pressure threshold value.

Optionally, the processor is arranged to control the operation of the heat providing element in accordance with data indicating instructions input by a user.

Optionally, the processor is arranged to control the heat providing element based on an ambient characteristic as detected by an ambient characteristic instrument on the aircraft.

Optionally, the heat providing element is disabled or enabled based on a correspondence relationship between the value of a characteristic of the hydraulic system and a value of an ambient characteristic.

Optionally, the apparatus includes the reservoir.

Optionally, the heat providing element is integrated into the reservoir.

Optionally, the heat providing element comprises one or more heat generating parts arranged to generate heat to provide heat to the contents of the reservoir.

Optionally, the heat providing element is a heat directing element arranged to direct heat to the reservoir from a heat generating component of the hydraulic reservoir.

A second aspect of the present invention provides an aircraft comprising an apparatus according to the first aspect.

A third aspect of the present invention provides a method of controlling heat provision to a hydraulic system of an aircraft. The method comprises determining a value associated with a physical characteristic with respect to the aircraft; comparing the determined value with temperature control criteria; and activating a heat providing element arranged to provide heat to the contents of a reservoir of the hydraulic system on the basis of the comparison.

Optionally, the method comprises, when the heat providing element is activated, circulating hydraulic fluid within a part of the hydraulic system through an orifice using a pump.

Optionally, the physical characteristic is a temperature, a gas pressure or a fluid pressure within the reservoir of the hydraulic system.

Optionally, the method comprises repeatedly determining the value associated with the physical characteristic with respect to the aircraft; and controlling the operation of the heat providing element according to a feedback control scheme on the basis of the temperature control criteria and the repeatedly determined values.

A fourth aspect of the present invention provides a system for controlling one or more characteristics of a hydraulic system of an aircraft. The system comprises a heat providing element arranged to provide heat to the contents of a reservoir of the hydraulic system; one or more sensors arranged to indicate one or more characteristics within the hydraulic system; and a processor. The processor is arranged to: compare the one or more characteristics detected by the one or more sensors to a given operating condition; and operate the heat providing element on the basis of the comparison.

A fifth aspect of the present invention provides an apparatus arranged to control parameters of a hydraulic system of an aircraft. The apparatus comprises a temperature control component arranged to control the temperature of a reservoir of the hydraulic system by heating the reservoir. The temperature control component comprises a heater arranged to heat the reservoir; and a controller arranged to implement instructions to control the heater.

### BRIEF DESCRIPTION OF THE DRAWINGS

Embodiments of the invention will now be described, by way of example only, with reference to the accompanying drawings, in which:
Figure 1 shows a schematic view of an aircraft;
Figure 2 shows a schematic view of a system for use with a hydraulic system of the aircraft of Figure 1;
Figure 3 shows a schematic view of a hydraulic system of the aircraft of Figure 1; and
Figure 4 is a flow diagram showing a method of controlling heat provision to the hydraulic system of Figure 3;

### DETAILED DESCRIPTION

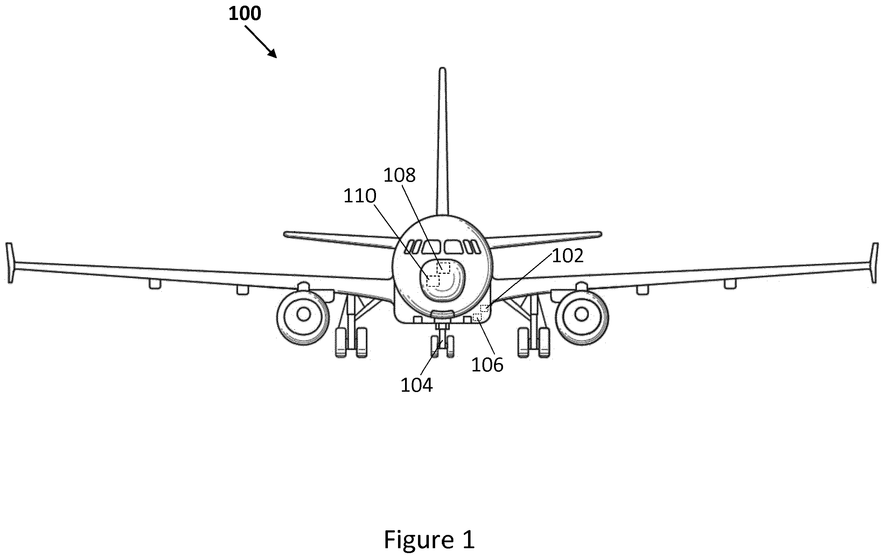

Figure 1 is a simplified schematic view of an aircraft 100. The aircraft 100 comprises a hydraulic system 102. The hydraulic system 102 may, for example, comprise linear hydraulic actuators, a hydraulic motor, a hydraulic generator, or other components which function using hydraulic pressure. The hydraulic system 102 of this example is for actuating various components of the aircraft 100, such as landing gear, landing gear bay doors, cargo doors, etc. In this example, the hydraulic system 102 controls the nose landing gear 104 of the aircraft 100, as well as the landing gear bay doors (not shown) of the aircraft 100.

The aircraft 100 comprises a hydraulic characteristic control apparatus 106 (hereinafter "control apparatus") for controlling one or more characteristics of the hydraulic system 102 of the aircraft 100. For example, the control apparatus 106 may be for modifying the temperature within a reservoir of the hydraulic system 102, the gas pressure in the reservoir of the hydraulic system 102, and/or for modifying a fluid pressure in a reservoir of the hydraulic system 102, etc. In other words, the control apparatus 106 is arranged to control parameters of the hydraulic system 102 of the aircraft 100.

The aircraft 100 also comprises instruments 108. The instruments 108 may, for example, comprise various ambient characteristic instruments for detecting ambient characteristics in the vicinity of the aircraft 100. The instruments 108 may also comprise aircraft instruments for detecting characteristics of the aircraft 100. An example of an ambient characteristic that may be detected is ambient temperature. Other examples include ambient humidity level, altitude, ambient air pressure, etc. The aircraft 100 also includes a computing system 110 which may comprise one or more processors and one or more computer readable storage media. The computing system 110 may control various functions of the aircraft 100. For example, the computing system 110 may control components of the aircraft 100 on the basis of values of characteristics detected by the instruments 108.

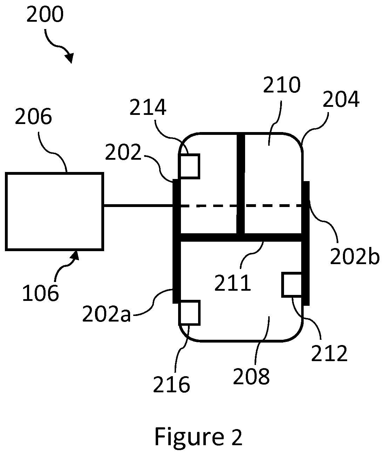

The control apparatus 106 is schematically illustrated in Figure 2. The control apparatus 106 comprises a heat providing element 202 arranged to provide heat to the contents of a reservoir 204 of the hydraulic system 102. The control apparatus 106 also comprises a processor 206 arranged to control the operation of the heat providing element 202. The control apparatus 106 therefore comprises a temperature control component arranged to control the temperature of the reservoir 204, which temperature control component comprises the heater 202 arranged to heat the reservoir 204, and a controller 206 arranged to implement instructions to control the heater 202.

The reservoir 204 contains a hydraulic fluid 208 and a gas 210. In the example of Figure 2, the hydraulic fluid 208 and the gas 210 within the reservoir 204 are separated by a piston 211 so that they do not mix. In other examples, the fluid 208 and the gas 210 may be separated by a diaphragm, bellows (e.g. welded metal bellows), or the like. The hydraulic fluid 208 is typically a liquid. It will be understood that hydraulic fluid 208 is circulated through the hydraulic system 102 in order for the hydraulic system 102 to perform its function (for example, actuate, in other words extend or retract, the nose landing gear 104). The hydraulic fluid 208 may be any fluid suitable for use in a hydraulic system, for example, the hydraulic fluid 208 may be an oil. Similarly, the gas 210 may be any gas suitable for use in a hydraulic system, for example, Nitrogen gas or Helium gas. The processor 206 of apparatus 106 may be part of the computing system 110 of the aircraft 100. Alternatively, processor 206 may be provided separately to the computing system 110 of Figure 1.

In some examples, the control apparatus 106 may include the reservoir 204. For example, the control apparatus 106 may be provided along with reservoir 204 for use with a hydraulic system such as hydraulic system 102 of the aircraft 100. In some examples, the heat providing element 202 may, for example, be integrated into the reservoir 204. For example, the walls of the reservoir 204 may comprise regions which function as heat generating parts of the heat providing element 202 under the control of the processor 206. In some examples, the heat providing element 202 may be provided inside the reservoir 204 so as to provide heat to the contents of the reservoir 204 more directly.

The control apparatus 106 may form part of a hydraulic characteristic control system 200 (hereinafter "control system") for controlling one or more characteristics of the hydraulic system 102 of the aircraft 100 to maintain the hydraulic system 102 in accordance with a given operating condition. The given operating condition may comprise, for example, maximum or minimum values, or respective ranges of values of the one or more characteristics of the hydraulic system 102, in accordance with which the hydraulic system 102 is intended to function correctly e.g. in accordance with which a fault condition of the hydraulic system 102 occurring is unlikely. For example, the given operating condition may comprise a requirement that the temperature within the reservoir 204 is above a temperature threshold, a requirement that the gas pressure of the gas 210 within the reservoir 204 is above a gas pressure threshold and/or a requirement that the fluid pressure of the hydraulic fluid 208 within the reservoir 204 being above a fluid pressure threshold. It will be understood that the temperature, gas pressure and fluid pressure within the reservoir are interdependent. Therefore, the hydraulic characteristic control system 200 may maintain the hydraulic system 102 in accordance with the given operating condition by controlling the temperature within the reservoir 204, for example.

In addition to the hydraulic characteristic control apparatus 106, the control system 200 may comprise one or more measuring instruments in the form of one or more sensors 212, 214, 216 arranged to indicate one or more characteristics within the hydraulic system 102. The processor 206 in the control system 200 may be arranged to compare the one or more characteristics detected by the one or more sensors 212, 214, 216 to the given operating condition, and operate the heat providing element 202 on the basis of the comparison. Thus, the processor 206 may be arranged to control the heat providing element 202 based on one or more characteristics of the hydraulic system 102 as detected by the sensors 212, 214, 216.

The one or more sensors 212, 214, 216 are included in the hydraulic system 102. In the example of Figure 2, the sensors 212, 214, 216 are included in the reservoir 204. In some examples, the one or more sensors 212, 214, 216 may be positioned away from the reservoir 204 elsewhere in the hydraulic system 102. The sensor 212 shown in Figure 2 may, for example, be a temperature sensor 212 included in the reservoir 204. In some examples, the one or more characteristics of the hydraulic system 102 (based on which the processor 206 controls the heat providing element 202) may comprise the temperature as detected by the temperature sensor 212 included in the reservoir 204. The temperature as detected by the temperature sensor 212 may be referred to as the reservoir temperature.

In the example of Figure 2, the temperature sensor 212 is positioned at a part of the inside of the reservoir 204 submerged in hydraulic fluid 208. In some examples, the temperature sensor 212 may be positioned at a part of the inside of the reservoir 204 filled with the gas 210 (i.e. not submerged in hydraulic fluid 208). The processor 206 may be arranged to activate the heat providing element 202 to provide heat if the temperature as detected by the temperature sensor 212 included in the reservoir 204 is lower than a temperature threshold value.

The sensor 214 shown in Figure 2 may, for example, be a gas pressure sensor 214 included in the reservoir 204. In some examples, the one or more characteristics of the hydraulic system 102 (based on which the processor 206 controls the heat providing element 202) may comprise a gas pressure as detected by the gas pressure sensor 214 included in the reservoir 204. The gas pressure as detected by the gas pressure sensor 214 may be referred to as the reservoir gas pressure. In this example, the gas pressure sensor 214 is positioned at a part of the inside of the reservoir 204 filled with the gas 210 (i.e. not submerged in hydraulic fluid 208). Alternatively, or in addition, to being arranged to activate the heat providing element 202 to provide heat if the reservoir temperature as detected by the temperature sensor 212 is lower than a temperature threshold value, the processor 206 may be arranged to activate the heat providing element 202 to provide heat if the reservoir gas pressure as detected by the gas pressure sensor 214 is lower than a gas pressure threshold value.

The sensor 216 shown in Figure 2 may, for example, be a fluid pressure sensor 216 included in the reservoir 204. In some examples, the one or more characteristics of the hydraulic system 102 (based on which the processor 206 controls the heat providing element 202) comprise a fluid pressure as detected by the fluid pressure sensor 216 included in the reservoir 204. The fluid pressure as detected by the gas pressure sensor 216 may be referred to as the reservoir fluid pressure. In this example, the fluid pressure sensor 216 is positioned at a part of the inside of the reservoir 204 submerged in hydraulic fluid 208. Alternatively, or in addition, to being arranged to activate the heat providing element 202 responsive to the temperature detected by the temperature sensor 212 and/or the gas pressure detected by the gas pressure sensor 214, the processor 206 may be arranged to activate the heat providing element 202 to provide heat if the reservoir fluid pressure as detected by the fluid pressure sensor 216 is lower than a fluid pressure threshold value.

As mentioned above, the processor 206 is arranged to control the operation of the heat providing element 202. Also, as described above, the processor 206 may activate the heat providing element 202 based on the reservoir temperature as detected by the temperature sensor 212, the reservoir gas pressure detected by the gas pressure sensor 214 and/or the reservoir fluid pressure detected by the fluid pressure sensor 216. Since, as described above, the temperature, gas pressure and fluid pressure within the reservoir 204 are interdependent, the processor may activate the heat providing element 202 responsive to a comparison of any one or more of the detected respective values of these characteristics to their respective thresholds in order to maintain the hydraulic system 102 in accordance with the given operating condition.

The heat providing element 202 may comprise one or more heat generating parts arranged to generate heat in order to provide heat to the contents of the reservoir 204. In the example of Figure 2, the heat providing element 202 comprises a first heat generating part 202a and a second heat generating part 202b positioned on opposite sides of, and in contact with the reservoir 204 of the hydraulic system 102. The first and second heat generating parts 202a, 202b are thus positioned so as to provide heat to the reservoir 204 and therefore to provide heat to the contents of the reservoir 204. In other examples, the heat providing element may comprise an arrangement different to the one shown in Figure 2. The heat providing element 202 may comprise only one heat generating part or more than two heat generating parts. The heat generating parts may, for example, be positioned differently with respect to the reservoir 204 than as shown in Figure 2. In some examples, the heat providing element 202 may comprise a single heat generating part, for example a heat generating part which surrounds the reservoir 204. In one example, the single heat generating part is of a hollow cylindrical shape and surrounds the reservoir 204. In some examples, the heat providing element 202 comprises a single heat generating part which does not substantially completely surround the reservoir 204. In such examples, the heat generating part may be of physical characteristics (i.e. size, shape, etc) and position with respect to the reservoir 204 such that sufficient heat is provided to the reservoir 204 to control the reservoir temperature.

The first and second heat generating parts 202a, 202b may be placed in contact with the external surface of the reservoir 204 so as to provide good thermal contact between the heat generating parts 202a, 202b and the reservoir 204. In other examples, the heat generating parts 202a, 202b of the heat providing element 202 may be thermally coupled to the surface of the reservoir 204 via a thermally conductive path provided by thermally conductive adhesive, mechanical coupling, the use of a thermal pad, a combination thereof, or the like. In some examples, a lug may be machined on the outside of the reservoir 204 and the heat generating parts of the heat providing element 202 may be fixed to the lug. In further examples, the first and second heat generating parts 202a, 202b are positioned close to, but separated from, the reservoir 204 such that heat generated by the heat generating parts 202a, 202b is provided to the reservoir 204. As described above, the heat providing element 202 may be integrated with the reservoir 204, or may be provided inside the reservoir 204.

In some examples, the heat generating providing element 202 may be integral to the reservoir 204. For example, the reservoir 204 may comprise electrically conductive components (e.g. the walls of the reservoirs 204 may comprise conductive material). Current may flow through the electrically conductive components of the reservoir 204 which may generate heat in response. In some examples, the reservoir 204 may be a composite reinforced reservoir, for example, comprising a metallic liner and carbon fibre composite outer shell. In such examples, a heating element (e.g. electric wire) may be woven within the composite material to provide an embedded heat providing element 202.

The first and second heat generating parts 202a, 202b may, for example, be resistive heaters. For example, the first and second heat generating parts 202a, 202b may comprise resistive elements which generate heat resistively upon being supplied with electrical power. The first and second heat generating parts 202a, 202b may, for example, comprise heat generating lamps such as halogen lamps comprising filaments, radiators through which a heated fluid flows in order for the radiators to output heat, inductive heating arrangements comprising inductor coils and susceptor elements, or the like. It should be appreciated that the first heat generating part 202a may not be identical to the second heat generating part 202b. For example, the first heat generating part 202a may use a different method of generating heat than the second heat generating part 202b. More generally various combinations of components and methods for generating heat may be used in the heat providing element 202.

In some examples, the heat providing element 202 does not itself generate heat, but is arranged to direct heat to the reservoir from another heat generating component of the hydraulic system 102. For example, the heat providing element 202 may be arranged to direct heat to the reservoir 204 from a motor pump of the hydraulic system 102. In such examples, the processor 206 activating the heat providing element 202 may also activate the component of the hydraulic system 102 from which heat is directed. For example, when the processor 206 activates the heat providing element 202, e.g. responsive to a temperature, gas pressure and/or fluid pressure threshold, the processor may also activate a pump of the hydraulic system 102 from which the heat providing element 202 directs heat towards the reservoir 204.

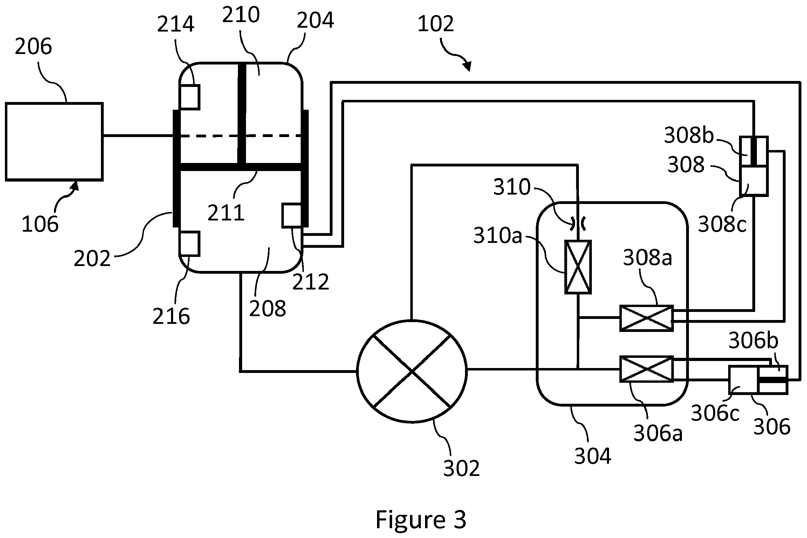

Figure 3 schematically illustrates an example of hydraulic system 102. Note that to maintain clarity in Figure 3, some of the reference numerals present in Figure 2 are omitted, although the hydraulic system 102 of Figure 3 may include all components shown in Figure 2. The hydraulic system 102 comprises a pump 302 which pumps hydraulic fluid 208 from the reservoir 204 towards a valve arrangement 304. In this example, the valve arrangement 304 directs the hydraulic fluid 208 towards a first hydraulic actuator 306 and a second hydraulic actuator 308. For example, the first hydraulic actuator 306 may be for actuating the nose landing gear 104, and the second hydraulic actuator may be for actuating the landing gear bay doors of the aircraft 100. In some examples, the hydraulic system 102 may also comprise an actuator for actuating cargo doors of aircraft 100 (e.g. a third hydraulic actuator). It will be understood that actuators 306, 308 may for example comprise pistons to effect movement responsive to hydraulic pressure. The valve arrangement 304 directs the hydraulic fluid 208 towards respective annular piston areas 306b, 308b, as well as full piston areas 306c, 308c of the actuators 306 and 308, depending on the desired direction of movement. The hydraulic fluid 208 returns to the reservoir 204 from the area of actuators 306, 308 which are not supplied hydraulic fluid 208 by the valve arrangement 304. For example, if hydraulic fluid is supplied to the annular piston area 306b of the first actuator 306, hydraulic fluid 208 returns to the reservoir from the full piston area 306c of the first actuator 306. The valve arrangement 304 in this example also directs the hydraulic fluid 208 towards an orifice 310. The valve arrangement 304 comprises valves 306a, 308a and 310a which control the flow of hydraulic fluid 208 to the first actuator 306, second actuator 308 and the orifice 310, respectively.

In order for the pump 302 to correctly pump the hydraulic fluid 208, the fluid pressure of hydraulic fluid 208 may be required to be above the fluid pressure threshold for proper pump-priming (i.e. the introduction of hydraulic fluid 208 into pump 302 to prepare it for working). Maintaining the fluid pressure above its respective threshold may also prevent cavitation during pumping (i.e. formation of gas bubbles within the hydraulic fluid 208). In examples where the processor 206 controls the heat providing element 202 based on the reservoir temperature and/or the reservoir gas pressure, the temperature threshold and/or the gas pressure threshold may be set so that the reservoir temperature and/or the reservoir gas pressure being above their respective threshold values results in a reservoir fluid pressure which allows the pump 302 to correctly pump the hydraulic fluid 208.

Furthermore, for the pump 302 to work correctly, the fluid viscosity of the hydraulic fluid 208 may be required to be above a given fluid viscosity. Maintaining the reservoir temperature above the temperature threshold may contribute to maintaining the fluid viscosity of the hydraulic fluid 208 above the given fluid viscosity.

The given operating condition according to which the hydraulic system 102 is intended to function may depend, for example, on the properties of the hydraulic fluid 208, the load intended to be moved by the hydraulic actuators 306, 308, etc. Hydraulic reservoirs larger in size may be required for greater reservoir gas pressure. For example, the greatest reservoir gas pressure the hydraulic reservoir 204 is intended to maintain may depend on its size. If the hydraulic system 102 is required to function (i.e. have characteristics in accordance with the given operating condition) in low ambient temperatures, the reservoir 204 may be provided with a gas pressure such that the gas pressure and the fluid pressure within the reservoir 204 are maintained above their respective thresholds at the required low ambient temperatures. However, the control apparatus 106 and the control system 200 advantageously allow hydraulic reservoirs of a given size to be used at lower ambient temperatures compared to prior art systems, while maintaining the reservoir gas pressure above the gas pressure threshold. This is because heat provided by the heat providing element 202 compensates for the lower temperature by maintaining a higher temperature within the reservoir 204, thereby maintaining the gas and fluid pressures above their respective thresholds.

The control apparatus 106 and the control system 200 therefore advantageously allow, for example, a reduction in size of hydraulic reservoirs that may be used at low ambient temperatures. The control apparatus 106 and the control system 200 therefore also advantageously allow hydraulic systems of the aircraft 100 to be placed away from other heat producing components of the aircraft 100. It will also be understood that hydraulic reservoirs may be provided with lower gas pressures for use at low ambient temperatures when apparatus 106 or system 200 is used. This may advantageously result, for example, in higher pressure differentials in the actuators 306, 308. For example, lower gas pressures permitted by use of the control apparatus 106 or system 200 may allow pressure differentials sufficient for actuators 306, 308 to properly function at high ambient temperatures. Use of lower gas pressures may advantageously allow a reduction in the effective surface area of actuator pistons and therefore allow a reduction in the overall actuator size and mass.

In the above examples, the processor 206 is arranged to control the heat providing element 202 based on one or more characteristics of the hydraulic system 102 as detected by one or more sensors associated with the hydraulic system 102. Alternatively, or in addition, the processor 206 may be arranged to control the heat providing element 202 based on an ambient characteristic as detected by an ambient characteristic instrument comprised in the aircraft 100. For example, the processor 206 may control the heat generating arrangement 206 based on the ambient temperature in the vicinity of the aircraft 100. The ambient temperature in the vicinity of the aircraft 100 may provide an indication as to the characteristics within the reservoir 204. For example, a particular ambient temperature may correspond to a particular temperature within the reservoir 204, a particular gas pressure within the reservoir 204 and a particular fluid pressure within the reservoir 204. Thus, the processor 206 may control the heat providing element 202 based on an ambient characteristic in order to maintain the hydraulic system 102 in accordance with the given operating condition.

In some examples, the processor 206 may disable or enable the heat providing element 202 based on a correspondence relationship between the value of a characteristic of the hydraulic system 102 and a value of an ambient characteristic. For example, in examples in which the processor 206 is arranged to control the heat providing element 202 on the basis of both one or more ambient characteristics, and one or more characteristics of the hydraulic system 102, the processor 206 may be arranged to activate the heat providing element 202 only if the one or more ambient characteristics and the one or more characteristics of the hydraulic system 102 satisfy the correspondence relationship. In such examples, activation of the heat providing element 202 may be prevented in a situation where one or more sensors (either associated with the hydraulic system 102 or instruments for detecting ambient characteristics) malfunction. For example, the correspondence relationship may be satisfied if the difference between the ambient characteristic in question and the characteristic of the hydraulic system 102 in question is below a difference threshold amount. In a specific example, the correspondence relationship may be satisfied if the difference between the ambient temperature and the reservoir temperature is less than 3°C. For example, if the temperature sensor 212 indicates a temperature within the reservoir 204 of -55°C whereas the ambient temperature in the vicinity of the aircraft 100 is -10°C, the heat providing element is not activated because such an incoherence between the ambient temperature and the reservoir temperature is unlikely, indicating a possible fault condition with one of the sensors in question.

Alternatively or in addition, the processor 206 may be arranged to control the operation of the heat providing element 202 in accordance with data indicating instructions input by a user. For example, ground crew checking the aircraft prior to take-off may input data indicating instructions according to which the processor 206 is to control the heat providing element 202. For example, the ground crew may measure ambient characteristics and/or characteristics of the hydraulic system 102, and input data indicating instructions for controlling the heat providing element 202 accordingly. The instructions provided by the user may indicate timings, temperatures, altitudes, etc. based on which the processor 206 is to control the heat providing element 202. For example, if the ambient temperature is low, the user may input data indicating that the heat providing element 202 is to be activated for a specified period of time. Alternatively or in addition, the user may input data indicating instructions indicating the given operating condition according to which the processor 206 is to control the heat providing element 202. The user may input data indicating such instructions using data input apparatus comprised in the aircraft 100 or data input apparatus which may be comprised in the control apparatus 106 or control system 200.

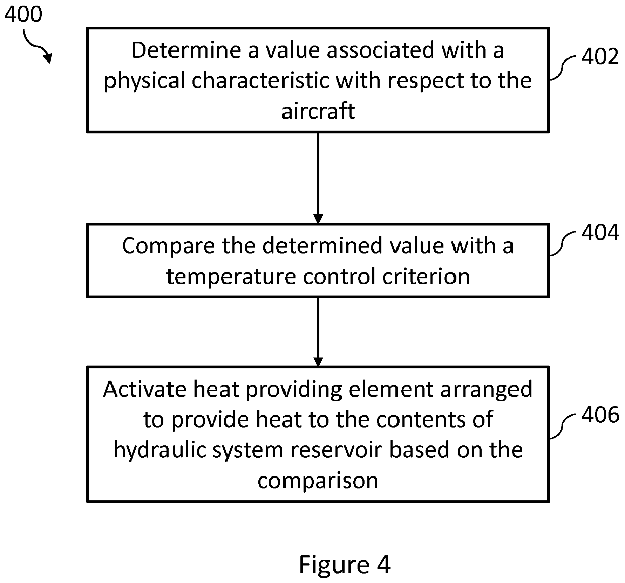

Figure 4 is a flow diagram illustrating a method 400 of controlling heat provision to the hydraulic system 102 of the aircraft 100. At 402 of method 400, a value associated with a physical characteristic with respect to the aircraft 100 is determined. For example, the physical characteristic with respect to the aircraft may be a characteristic of the hydraulic system 102 such as temperature within the reservoir 204 of the hydraulic system 102 (as detected by the temperature sensor 212), gas pressure within the reservoir 204 of the hydraulic system 102 (as detected by the gas pressure sensor 214) or fluid pressure within the reservoir 204 (as detected by the fluid pressure sensor 216). Or, the physical characteristic with respect to the aircraft may be an ambient characteristic as detected by an ambient characteristic instrument on the aircraft 100 (for example, an ambient characteristic instruments forming part of the instruments 108 comprised in the aircraft 100). The value of the physical characteristic may, for example, be determined by the processor 206 on the basis of values detected by the ambient characteristic instrument or a sensor associated with the hydraulic system 102.

At 404 of the method 400, the value determined at 402 is compared with temperature control criteria. For example, the temperature control criteria may comprise a threshold value corresponding to the physical characteristic the value of which is determined at 402. For example, in the case where the reservoir temperature is determined at 402, the temperature control criteria comprises a reservoir temperature threshold. In other examples, depending on the physical characteristic to be determined at 402, the temperature control criteria comprises a reservoir gas pressure threshold, a reservoir fluid pressure threshold, or an ambient characteristic threshold (for example, an ambient temperature threshold).

At 406 of method 400, the heat providing element 202 arranged to provide heat to the contents of the reservoir 204 of the hydraulic system 102 is activated on the basis of the comparison at 404 of method 400. Taking the example of the physical characteristic being the reservoir temperature and the temperature control criteria being a reservoir temperature threshold, at 406, the processor 206 activates the heat providing element 202 on the basis of the comparison at 404 between the reservoir temperature determined at 402 and the reservoir temperature threshold. For example, the processor 206 activates the heating providing element 202 if the determined reservoir temperature is below the reservoir temperature threshold.

The method 400 may also comprise, when the heat providing element 202 is activated, circulating hydraulic fluid 208 within a part of the hydraulic system through the orifice 310 using the pump 302. Circulating the hydraulic fluid 208 through the orifice 310 may increase the temperature of and reduce the viscosity of the hydraulic fluid 208 which circulates between the orifice 310 and the pump 302. Circulating the hydraulic fluid 208 through the orifice 310 in combination with activating the heat providing element 202 may contribute to the hydraulic system 102 being maintained in accordance with the given operating condition.

The method 400 may also comprise repeatedly determining the value associated with the physical characteristic with respect to the aircraft 100. The method 400 may also comprise controlling the operation of the heat providing element 202 according to a feedback control scheme on the basis of the temperature control criteria and the repeatedly determined value. For example, the feedback control scheme may be implemented in order to maintain a characteristic of the hydraulic system 102 such that it meets the temperature control criteria. Taking the example in which the physical characteristic is the reservoir gas pressure, the reservoir gas pressure may be repeatedly determined based on the detection by the gas pressure sensor 214. A feedback control scheme may be implemented on the basis of the temperature control criteria which in this example comprises a reservoir gas pressure threshold. For example, the feedback control scheme may be implemented in order to control the heat providing element 202 to maintain the reservoir gas pressure above the reservoir gas pressure threshold.

In examples where the physical characteristic with respect to the aircraft 100 is an ambient characteristic, such as ambient temperature for example, the temperature control criteria may specify an amount of time within a given period of time for the heat providing element 202 to provide heat. In such examples, the feedback control scheme may modify the parameters of the temperature control criteria based on changes in the value of the ambient temperature as the ambient temperature is repeatedly determined.

It will be appreciated that various different feedback control schemes may be used as part of method 400. In some examples, a proportional-integral-derivative feedback control scheme may be used in order to maintain a characteristic of the hydraulic system 102 above its respective threshold value.

Although the invention has been described above with reference to one or more preferred examples, it will be appreciated that various changes or modifications may be made without departing from the scope of the invention as defined in the appended claims.

It should be noted that the term "or" as used herein is to be interpreted to mean "and/or", unless expressly stated otherwise.

## Claims

1. An apparatus for controlling one or more characteristics of a hydraulic system of an aircraft, the apparatus comprising:
a heat providing element arranged to provide heat to the contents of a reservoir of the hydraulic system; and
a processor arranged to control the operation of the heat providing element.

2. An apparatus according to claim 1, wherein the processor is arranged to control the heat providing element based on one or more characteristics of the hydraulic system as detected by one or more measuring instruments associated with the hydraulic system, wherein, optionally, the one or more characteristics of the hydraulic system comprise a temperature as detected by a temperature sensor included in the reservoir,
wherein, optionally, the processor is arranged to activate the heat providing element to provide heat if the temperature as detected by the temperature sensor included in the reservoir is lower than a temperature threshold value,
wherein, optionally the one or more characteristics of the hydraulic system comprise a gas pressure as detected by a gas pressure sensor included in the reservoir, wherein, optionally, the processor is arranged to activate the heat providing element to provide heat if the gas pressure as detected by a gas pressure sensor included in the reservoir is lower than a gas pressure threshold value,
wherein, optionally, the one or more characteristics of the hydraulic system comprise a fluid pressure as detected by a fluid pressure sensor included in the reservoir, and
wherein, optionally, the processor is arranged to activate the heat providing element to provide heat if the fluid pressure as detected by the fluid pressure sensor included in the reservoir is lower than a fluid pressure threshold value.

3. An apparatus according to any preceding claim, wherein the processor is arranged to control the operation of the heat providing element in accordance with data indicating instructions input by a user.

4. An apparatus according to any preceding claim, wherein the processor is arranged to control the heat providing element based on an ambient characteristic as detected by an ambient characteristic instrument on the aircraft.

5. An apparatus according to any preceding claim, wherein the heat providing element is disabled or enabled based on a correspondence relationship between the value of a characteristic of the hydraulic system and a value of an ambient characteristic.

6. An apparatus according to any preceding claim, wherein the apparatus includes the reservoir.

7. An apparatus according to any preceding claim, wherein the heat providing element is integrated into the reservoir.

8. An apparatus according to any preceding claim, wherein the heat providing element comprises one or more heat generating parts arranged to generate heat to provide heat to the contents of the reservoir.

9. An apparatus according to any preceding claim, wherein the heat providing element is a heat directing element arranged to direct heat to the reservoir from a heat generating component of the hydraulic reservoir.

10. An aircraft comprising an apparatus according to any preceding claim.

11. A method of controlling heat provision to a hydraulic system of an aircraft, the method comprising:
determining a value associated with a physical characteristic with respect to the aircraft;
comparing the determined value with a temperature control criteria; and
activating a heat providing element arranged to provide heat to the contents of a reservoir of the hydraulic system on the basis of the comparison.

12. A method according to claim 11 comprising:
when the heat providing element is activated, circulating hydraulic fluid within a part of the hydraulic system through an orifice using a pump.

13. A method according to claim 11 or claim 12, wherein the physical characteristic is a temperature, a gas pressure or a fluid pressure within the reservoir of the hydraulic system.

14. A method according to any of claim 11 to 13 comprising;
repeatedly determining the value associated with the physical characteristic with respect to the aircraft; and
controlling the operation of the heat providing element according to a feedback control scheme on the basis of the temperature control criteria and the repeatedly determined values.

15. A system for controlling one or more characteristics of a hydraulic system of an aircraft, the system comprising:
a heat providing element arranged to provide heat to the contents of a reservoir of the hydraulic system;
one or more sensors arranged to indicate one or more characteristics within the hydraulic system; and
a processor arranged to:
compare the one or more characteristics detected by the one or more sensors to a given operating condition; and
operate the heat providing element on the basis of the comparison.
